# EUROPEAN PATENT APPLICATION

(11) **EP 4 398 432 A1**
(43) Date of publication of application: **10.07.2024**
(21) Application number: 23150071.1
(22) Date of filing: 03.01.2023
(51) Int. Cl.: H02H 7/26, H02H 9/02

(54) **METHOD FOR OPERATING A HIGH-VOLTAGE DC NETWORK**

(71) Applicant: Siemens Energy Global GmbH & Co. KG, 81739 München (DE)
(72) Inventor: Westerweller, Thomas, 96135 Stegaurach (DE)

(57) **Abstract**

The present invention relates to a method for operating a high-voltage DC network (1). The method comprises the steps of activating at least two fault separation devices (16, 17, 20) upon detection of a fault incident in the network, thereby separating a fault separation zone (41) from a non-faulty part of the DC network, opening at least two residual current switches (27, 30) arranged within the fault separation zone, thereby isolating a fault clearing zone (48) within the fault separation zone.

## Description

The present invention relates to a method for operating a high-voltage DC network.

Generally, a DC network (DC grid) comprises one or several connected DC lines. In addition, DC networks usually comprise DC operating equipment, such as converters (AC/DC and/or DC/DC), energy storage devices, DC choppers, DC cables, DC overhead lines (or cables), DC circuit breakers, energy sources (e.g., PV plants) and suitable loads. The present invention particularly relates to high-voltage networks, i.e., networks with a nominal voltage of more than 100 kV DC. In contrast to previously known and frequently implemented point-to-point HVDC connections, HVDC multi-terminal or meshed systems generally have the task of connecting more than one DC line(s) and more than two AC/DC converters and other operating equipment.

Fault currents caused by fault conditions in a HVDC grid lack zero crossings and hence classical fault clearing methods using mechanical (current) breakers is not feasible. Currents need to be reduced to a breakable level before mechanical devices can be utilized. The resistance causing a voltage drop in the branches of an HVDC grid is relatively small compared to the operational voltage level. Consequently, currents caused by fault conditions in the network will quickly reach values by far exceeding the withstand capability of the stressed components. A fault current can reach a level of more than a hundred times the nominal current. This imposes strong time constraints to the applied protection and the fault handling devices.

It is therefore an object of the present invention to provide a method for operation of an HVDC network which allows a reliable handling of DC faults in the network.

This object is achieved by a method according to claim 1.

According to the invention the method comprises the steps of activating at least two fault separation devices upon detection of a fault incident in the network, thereby separating a fault separation zone from a non-faulty part of the DC network and opening at least two residual current switches arranged within the fault separation zone, thereby isolating a fault clearing zone within the fault separation zone. Accordingly, the fault handling in a HVDC grid follows a two-step (two-phase) approach.

During a first phase, which can be described as a fault separation phase, the rapid increase of fault currents is stopped by activating the fault separation devices. This should best be achieved before currents exceed the withstand capability of the stressed components. Fault separation is achieved when the fault current has been suppressed to a residual value. Due to the inductance of the current path, the current will not collapse immediately, but start to decay with a system specific rate of change. The currents will not reduce to zero but to a relatively small residual value which does not impact the healthy part of the network. The activated fault separation devices separate the faulty part of the network from its healthy remaining part by suppressing infeed currents into the fault location. The outer boundary (periphery) of the fault separation zone is thus given by the activated current separation devices. The fault separation zone may comprise a plurality of interconnected DC network elements (DC operating equipment) and forms the part of the DC network, where the infeed current into the fault location is suppressed by the activated current separation devices.

The second phase can be described as a fault clearing phase. Fault clearing is the elimination of fault currents on a faulty item by interrupting all corresponding current infeed to the faulty item. During the second phase the residual current switches located within the fault separation zone are opened to break the currents still flowing after fault separation. Feasibility of such current breaking mechanical and/or semiconductor devices is given due to the low value of the residual currents. The residual current switches isolate the fault clearing zone within the fault separation zone and define its outer boundary. Due to economic reasons, it is expected that the HVDC network will comprise a much larger number of locations with residual current switches as compared to locations with fault separation devices. Consequently, the fault clearing zone might be smaller than the fault separation zone (there might be one or more network elements which lie within the fault separation zone but outside the fault clearing zone). As the operation of the healthy part of the grid is not affected by the residual current, fault clearing can be allowed a longer time as compared to fault separation.

By splitting the fault handling process into the above-described phases, individual solutions for necessary protection equipment and accompanying precautions in the HVDC network can be designed independently and therefore with increased reliability.

The method according to the invention can further increase the reliability of HVDC grids by reducing the number of network element failures without increasing the number of expensive separation devices. Further, it utilizes smart handling procedures for temporary faults (e.g., overhead transmission lines) as these faults will heal when currents are suppressed to residual values. No further clearing action is required.

According to an embodiment of the invention each of the fault separation devices is designed to commutate a fault current to an arrester current path comprising a surge arrester unit. The interruption of a DC (fault) current requires, that the current is suppressed to a residual value before actual residual current breaking can take place. This requires the generation of a commutation voltage which creates a current decrease (a negative di/dt) in the reactance of the current path. Preferably, upon activation of the fault separation device it commutates the fault current into a series connected arrester. This can be achieved e.g., by closing a parallel fault current switch.

After the activation of the fault separation devices a current within the fault separation zone is preferably reduced to a residual current below 10 A. Usually, at the end of the commutation process small residual currents are flowing (e.g., control errors, arrester leakage currents, etc.). These leakage currents must be interrupted by additional means. Typically, the current is interrupted using a mechanical switch. If the residual current is reduced below 10 A or even below 1 A, then the residual current switches can be designed particularly cost-effective. A residual value of the fault current preferably means a current that is small enough not to disturb the operation of the non-faulty network and that corresponding residual current switches are able to interrupt. Such currents may persist for extended time as far as the capability of the separation device is concerned. They are typically small enough that self-healing faults (e.g., flash-over of overhead lines) will quench. From a health and safety perspective these currents may still need immediate interruption.

According to an embodiment the residual current switch comprises a mechanical switch and/or a controllable semiconductor switch, thus, opening of the residual current switch comprises an opening of the mechanical and/or semiconductor switch. The residual current switches are operated to interrupt the residual current and provide galvanic discontinuation of the current path between the faulty item and the rest of the network. Generally, this functionality can also be achieved by disconnectors. However, due to the limited residual current breaking capacity and the relatively long operating times of disconnectors, special residual current breaking devices might be preferred. The expected residual current levels and the interrupting capabilities of the residual current switches need to be coordinated.

According to an aspect of the invention the method further comprises the step of deactivating the fault separation devices to energize all network elements of the fault separation zone which are arranged outside the fault clearing zone. After fault clearing is achieved, parts of the DC network need to be restored to operation. This phase can be described as reclosure phase (third phase). During the reclosure phase, deactivation of the fault separation devices will re-energize all parts of the fault separation zone which have not been cleared by residual current switches. A designated protective control preferably checks if re-energization has been successful (i.e., no persistent fault) and reactivates the current separation device and subsequent residual current switching in case of a failed reclosure phase.

Accordingly, the method can comprise the sequence of repeatedly deactivating the current separation devices without opening the residual current switches to allow a repetition of re-energization attempts (reclosures) for the fault separation zone.

The fault separation may require precautions in the high voltage circuit (e.g., reactors) to ensure selectivity and reliability of protection as well as reliable performance of the fault separation devices. In contrast thereto, fault clearing may utilize slower unit protection but shall not rely on precautions in the high voltage circuit. An additional back-up fault protection of the network can be achieved by expanding the fault separation and fault clearing zones. Such back-up action would particularly affect the next zone connecting to the location that failed to operate.

The invention will be further explained with reference to exemplary embodiments illustrated in the figures 1 to 3.
Figures 1 and 2 schematically show different embodiments of a DC network divided into zones;
Figure 3 schematically shows an example of the sequence of steps of the method according to the invention.

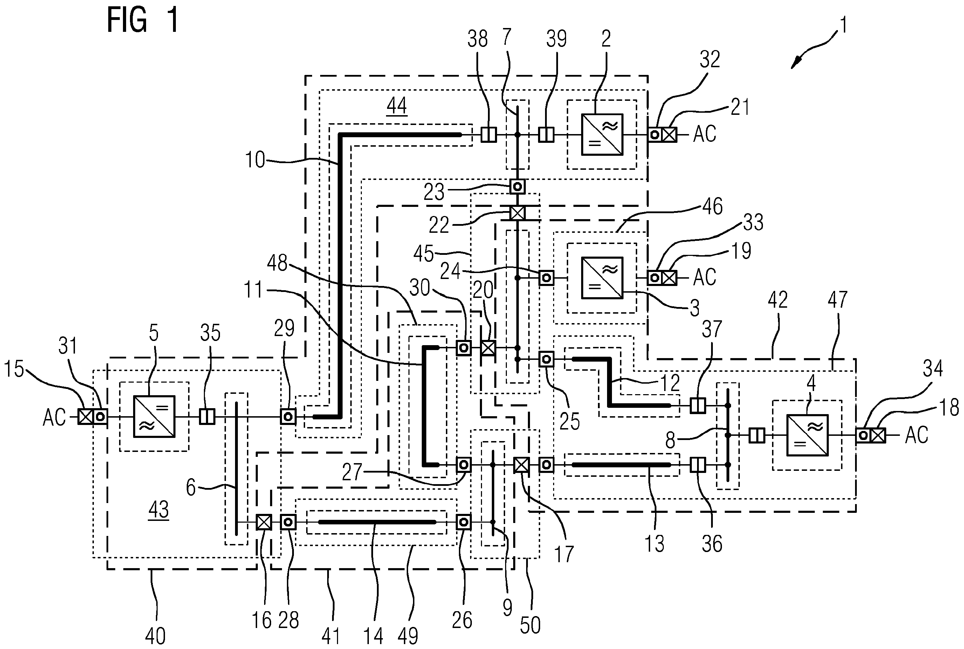

Figure 1 shows a DC network 1 in a single-pole network topology comprising a plurality of network elements (DC operating equipment). In particular, the DC network 1 comprises four AC-DC converters 2-5, four DC busses 6-9 (whereas the second DC bus 7 can also be considered to comprise two separate busses - one located in zone 44 and the other in zone 42) and five DC transmission lines 10-14. The DC network 1 further comprises current separation devices 16, 17, 20, 22, residual current switches 23-30 and disconnectors 35-39. In addition, there are also AC current breakers 31-34 on the respective AC side of each of the AC-DC converters 2-5 which provide both, separation and residual current switching functionality (the current separation functionality is indicated by boxes 15, 18, 19 and 21). The locations of the current separation devices 16-22 imply that the DC network 1 can be divided into three fault separation zones, which are indicated in figure 1 by three dashed lines 40-42. The locations of the residual current switches 23-30 imply that the DC network 1 can be divided into eight fault clearing zones, in figure 1 indicated by dashed lines 43-50. In case a fault is detected in the network, the fault separation devices next to the fault location are activated to isolate a corresponding separation zone. The operating voltage within the isolated fault separation zone will collapse and converter elements, if involved, may block or operate with zero direct voltage. The concerned fault clearing zone selectivity will be achieved by protective equipment at locations with residual current switching functionalities. In the given examples, it is assumed that the converters themselves do not provide separation and/or clearing functionality. Gates equipped only with disconnecting functions do not influence the boundaries of the fault clearing zones. Unfaulty network sections within a fault clearing zone or within a fault separation zone might be reenergized after the faulty section has been disconnected.

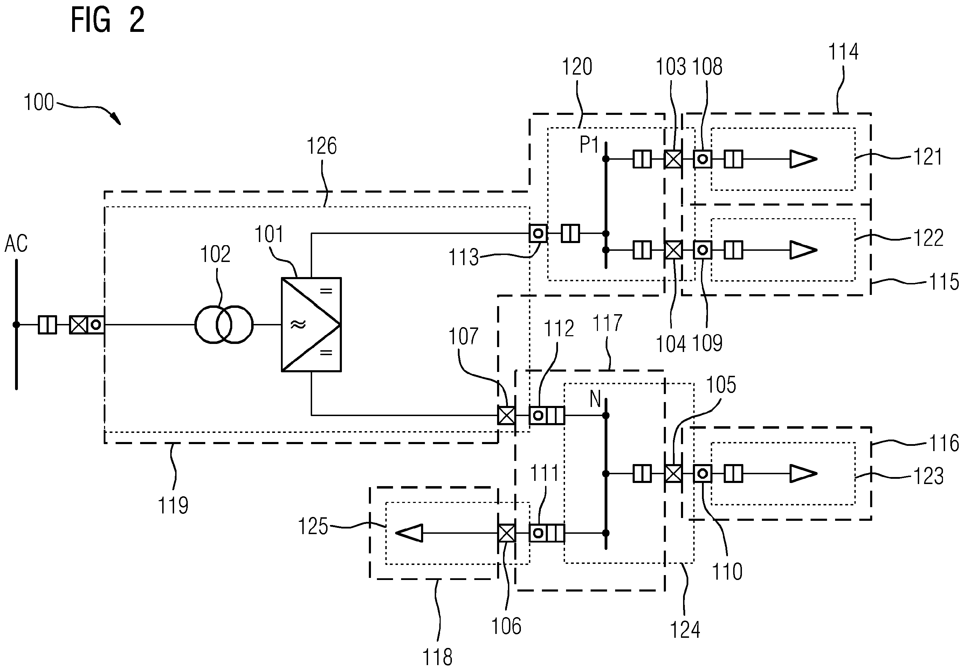

Figure 2 shows a DC network 100 in a bipole configuration (positive and neutral poles are explicitly shown). The DC network 100 comprises a converter unit 101 of a bipole AC-DC converter system. The pole converter unit 101 is on its AC side connected via a transformer 102 to an AC grid. On its DC side the pole converter unit 101 is arranged between a first (positive) DC pole P1 and a neutral pole N. The DC network 100 further comprises a plurality of current separation devices 103-107 and residual current switches 108-113. Dashed lines 114-119 indicate corresponding fault separation zones. Dashed lines 120-126 indicate respective fault clearing zones. A second converter unit (not shown) is connected to the neutral pole via a connecting arrangement 125.

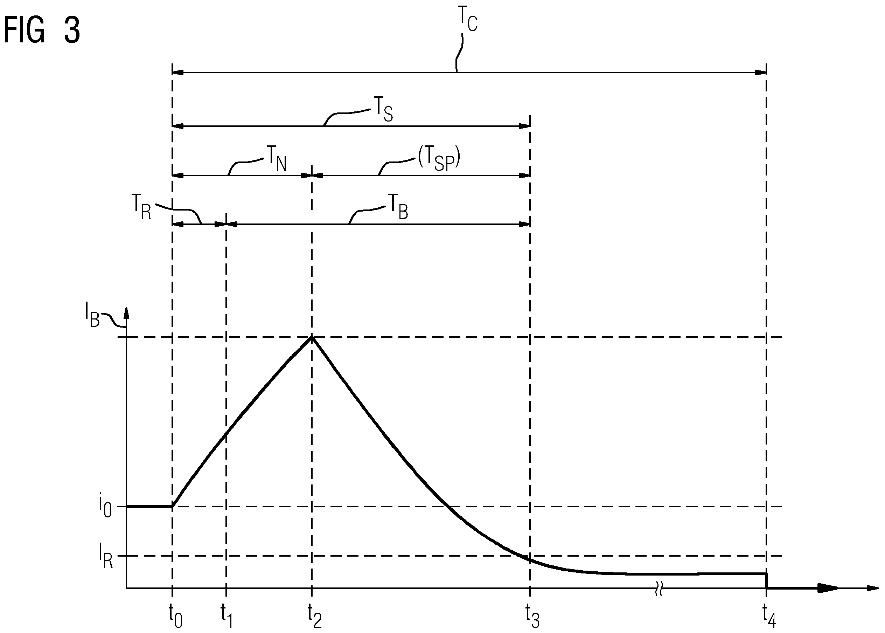

Figure 3 illustrates an example sequence of method steps according to the method described above using a current diagram of a time function of a fault current at a given location in a DC network (for example the DC network 1 of figure 1 or the DC network 100 of figure 2). I0 denotes the value of the pre-fault current. At a time t0 a fault incident occurs in the DC network. After t0 the current rapidly increases. At a time t1 an activation signal is sent by a network control to activate at least two current separation devices proximate to the fault location to separate a fault separation zone from a non-faulty part of the DC network. A corresponding time interval TR is the relay time. At a time t2 the fault current reaches its peak value iB (the time interval between t0 and t2 is often denoted as neutralization time TN) and decreases due to the separation from the rest of the DC network by the current separation devices (and the corresponding current suppression). At a time t3 it decreases to its residual value iR (the time interval TB between t1 and t3 is denoted as a break time), so that it can be interrupted by residual current switches provided in the DC network. Accordingly, at least two residual current switches arranged within the fault separation zone are opened, thereby isolating a fault clearing zone within the fault separation zone. Due to a switching time delay the current is interrupted at a later time t4. In figure 3, the time interval TC denotes the clearing time, the time interval TS denotes the separation time, and the time interval TSP denotes the current suppression time.

## Claims

1. Method for operating a high-voltage DC network (1) comprising the steps of
- activating at least two fault separation devices (16, 17, 20) upon detection of a fault incident in the network (1), thereby separating a fault separation zone (41) from a non-faulty part of the DC network (1),
- opening at least two residual current switches (27, 30) arranged within the fault separation zone (41), thereby isolating a fault clearing zone (48) within the fault separation zone (41).

2. Method according to claim 1, wherein each of the fault separation devices (16, 17, 20) is designed to commutate a fault current to an arrester current path comprising a surge arrester unit.

3. Method according to claim 2, wherein, after activation of the fault separation devices (16, 17, 20) a current within the fault separation zone is reduced to a residual current below 10 A.

4. Method according to any of the preceding claims, wherein opening the residual current switch comprises a step of opening a mechanical switch and/or a controllable semiconductor switch.

5. Method according to any of the preceding claims, wherein the method further comprises the step of
- deactivating the fault separation devices (16, 17, 20) to energize all network elements of the fault separation zone which are arranged outside the fault clearing zone.

6. Method according to any of the preceding claims, wherein the method comprises the sequence of repeatedly deactivating the current separation devices (16, 17, 20) without opening the residual current switches (27, 30) to allow a repetition of re-energization attempts for the fault separation zone (41).
